# EUROPÄISCHE PATENTSCHRIFT

(11) **EP 2 298 691 B1**
(45) Veröffentlichungstag und Bekanntmachung des Hinweises auf die Patenterteilung: **24.10.2012**
(21) Anmeldenummer: 10176824.0
(22) Anmeldetag: 15.09.2010
(51) Int. Cl.: B66F 9/075, B60K 1/04, B60L 11/18, B60S 5/06

(54) **Batterieentnahmegerät für ein Fahrzeug, insbesondere Elektroflurförderzeug, und Verriegelungseinrichtung für ein solches Batterieentnahmegerät**
Battery removal device for a vehicle, in particular an electric industrial truck and locking device for such a battery removal device
Appareil d'extraction de batterie pour un véhicule, notamment un chariot de manutention électrique, et dispositif de verrouillage pour un tel appareil d'extraction de batterie

(30) Priorität: 18.09.2009 DE 102009042116; 05.10.2009 DE 102009045340
(43) Veröffentlichungstag der Anmeldung: 23.03.2011
(73) Patentinhaber: Jungheinrich Aktiengesellschaft, 22047 Hamburg (DE)
(72) Erfinder: Haslberger, Johannes, 84427, St. Wolfgang (DE); Maier, Christian, 83556, Griesstätt (DE)
(74) Vertreter: Tiesmeyer, Johannes

(56) Entgegenhaltungen:
- EP-A1- 1 405 778
- EP-A2- 2 011 761
- DE-A1-102006 060 325
- FR-A1- 2 862 035
- JP-A- 2004 315 179

## Beschreibung

Die Erfindung betrifft ein Batterieentnahmegerät für ein Fahrzeug, insbesondere Elektroflurförderzeug, das eine seitliche Batteriefachöffnung und einen Batteriefachboden aufweisendes Batteriefach mit einem darin auf dem Batteriefachboden stehend aufgenommenen und in im Wesentlichen horizontaler Richtung aus dem Batteriefach durch die Batteriefachöffnung hindurch zu entnehmenden Wechselbatterieblock hat, der in der Nähe seiner im Batteriefach nächst der Batteriefachöffnung liegenden Seite einen von der Batteriefachöffnung her und von unten frei zugänglichen, nach unten abstehenden Hubanschlag zur Beaufschlagung durch das Batterieentnahmegerät aufweist, wobei das Batterieentnahmegerät ein verfahrbares Hubgerät mit höhenverstellbaren Lastaufnahmemitteln umfasst.

Elektromotorisch angetriebene und aus einem Batterieblock mit elektrischer Energie gespeiste Flurförderzeuge mit einem den Batterieblock enthaltenden seitlich zugänglichen Batteriefach für den Batteriewechsel sind in diversen Varianten bekannt.

Da ein Batterieblock der hier betrachteten Art ein relativ großes Gewicht und ein relativ großes Volumen hat, sind zum Auswechseln des Batterieblocks Batterieentnahmegeräte erforderlich. Dies sollten aus Kostengründen möglichst Standard-Transporthilfsmittel sein, wie etwa deichselgelenkte Gabelhubwagen oder ggf. Gabelstapler, mit denen man den Batterieblock auf Gabelzinken transportieren kann. Ein Problem hierbei liegt jedoch darin, dass in dem Batteriefach an der Unterseite des Batterieblocks normalerweise nicht genug Platz ist, um Gabelzinken eines solchen Transportgerätes einzuführen, um den Batterieblock auf die Gabelzinken aufzunehmen. Es sind bereits Lösungen bekannt, bei denen der Batteriefachboden von der seitlichen Zugriffsöffnung her tief eingeschnitten ist, so dass im Wesentlichen nur schmale Bodenseitenstreifen verbleiben, auf denen der Batterieblock steht. Ein solcher Batterieblock kann dann auf einfache Weise mit unter das Flurförderzeug in Ausrichtung zu einem solchen Einschnitt geschobenen Gabelzinken eines Gabelhubwagens untergriffen und dann mittels der Gabelzinken angehoben und durch Zurückziehen des Gabelhubwagens aus dem Batteriefach heraus transportiert werden. Ebenso einfach kann ein Batterieblock mit entsprechend umgekehrten Bewegungsabläufen unter Verwendung eines Gabelhubwagens in das Batteriefach mit offenem Batteriefachboden eingeschoben werden. Der relativ große Einschnitt in dem Batteriefachboden bedeutet jedoch auch eine erhebliche Schwächung der Rahmenstabilität des Fahrzeugs, was sich durch Rahmenverzug beim Batterieblockwechsel und bei der Aufnahme schwerer Lasten auf Lasttraggabeln des Flurförderzeugs zeigt und nicht mit einfachen Mitteln kompensiert werden kann.

Aus der EP 2011761 A2 sind ein Elektrogabelstapler mit einem seitlich zugänglichen Batteriefach für den Batteriewechsel und ein Batterieentnahmegerät in Gestalt eines Gabelhubwagens bekannt. Bei diesem bekannten Gabelstapler ist der Batteriefachboden nicht in der oben beschriebenen, nachteiligen Weise tief eingeschnitten. Der Batterieblock bzw. ein den Batterieblock tragender Schubrahmen weist an seinen beim horizontalen Herausziehen des Batterieblocks aus dem Batteriefach nachlaufenden bzw. hinteren Ende untere Stützrollen auf, mit dem er im Batteriefach auf dem Batteriefachboden abgestützt ist. An dem im bestimmungsgemäßen Einbauzustand des Batterieblocks im Batteriefach an der Batteriefachöffnung liegenden Ende des Batterieblockes weist dieser bzw. dessen Schubrahmen einen über das freie Ende des Batteriefachbodens hinweg nach unten abstehenden Hubanschlag in Form einer Leiste auf, die über die Unterseite des Batteriefachbodens hinaus nach unten hin absteht und sich in Längsrichtung des Flurförderzeugs erstreckt. Der Batterieblock bzw. dessen Schubrahmen liegt im Bereich seines an der Batteriefachöffnung liegenden Endes unmittelbar auf dem Batteriefachboden auf. Zum Wechseln des Batterieblocks wird z. B. ein Handgabelhubwagen an das Batteriefach herangeschoben, so dass die Laststraggabeln des Handgabelhubwagens unter den Batteriefachboden geführt werden. Danach werden die Lasttraggabeln angehoben, damit sie den Hubanschlag des Batterieblocks von unten beaufschlagen und im weiteren Verlauf der Hubbewegung den Batterieblock an dem zunächst noch an der Batteriefachöffnung liegenden Ende leicht anheben. Ein Zurückziehen des Handgabelhubwagens bewirkt dann, dass der mit dem Hubanschlag auf den Lasttraggabeln aufliegende Batterieblock aus dem Batteriefach herausgezogen wird, wobei er mit seinen Stützrollen auf dem Batteriefachboden abrollt. Sobald die Lasttraggabeln so weit zurückgezogen sind, dass sie nicht mehr den Batteriefachboden untergreifen, können sie weiter angehoben werden, um so den Batterieblock mit seinem Hubrahmen vollständig zu übernehmen, wobei Sicherungsanschläge zur Vermeidung eines unbeabsichtigten Herausziehens des Batterieblocks aus dem Batteriefach bei der Hubbewegung überwunden werden.

Die vorliegende Erfindung basiert auf einem derartigen Batteriewechselkonzept. Ihr liegt die Aufgabe zugrunde, ein Batterieentnahmegerät bereitzustellen, welches den Wechsel eines seitlich horizontal aus einem offenen Batteriefach herausziehbaren, mit einem nach unten abstehenden, von der Batteriefachöffnung her und von unten frei zugänglichen Hubanschlag an der Batteriefachöffnungsseite ausgestatteten Batterieblock erleichtert, wobei seitens des Batterieblocks lediglich geringfügige Anpassmaßnahmen, nämlich das Vorsehen eines Eingriffselementes, etwa in Form einer Öse oder Hinterschneidung, zu treffen sind.

Diese Aufgabe wird erfindungsgemäß mit einem Batterieentnahmegerät gemäß Anspruch 1 gelöst, wobei das Batterieentnahmegerät ein verfahrbares Hubgerät mit höhenverstellbaren Lastaufnahmemitteln und einer darauf angeordneten Verriegelungseinrichtung zur verriegelnden Ineingriffnahme des Batterieblocks an dessen Eingriffselement ist und die Verriegelungseinrichtung einen gegenüber dem vorderen Ende der Lastaufnahmemittel zurückversetzten Rampenabschnitt mit einer Auflaufschrägfläche und einer sich daran anschließenden Stützfläche für den Hubanschlag des Batterieblocks und ein zum Eingriffselement des Batterieblocks komplementäres Verriegelungselement aufweist, das dazu eingerichtet ist, mit dem Eingriffselement des Batterieblocks in verriegelnden Eingriff gebracht zu werden bzw. zu treten, wenn der Rampenabschnitt der Verriegelungseinrichtung den Hubanschlag des Batterieblocks beim Heranführen des Batterieentnahmegeräts an das Batteriefach, so dass sich das vordere Ende der Lastaufnahmemittel unter den Batteriefachboden erstreckt, untergreift.

Bei dem verfahrbaren Hubgerät kann es sich um ein Flurförderzeug, wie etwa einen Handgabelhubwagen oder einen Gabelstapler handeln. Besonders bevorzugt kommt jedoch ein elektromotorisch angetriebener Niederhubwagen oder Hochhubwagen mit Lasttraggabeln als Lastaufnahmemittel in Betracht.

Zur Entnahme des Batterieblocks aus dem Batteriefach des hier betrachteten Fahrzeugs wird zunächst eine üblicherweise vorhandene Batteriefachtür geöffnet, um die Batteriefachöffnung für den Zugriff auf den Batterieblock freizugeben. Sodann wird das Hubgerät an das Batteriefach herangefahren, so dass sich die Lastaufnahmemittel mit ihren vorderen Enden voraus unter den Batteriefachboden erstrecken und die auf den Lastaufnahmemitteln abgestützte Auflaufschrägfläche den Hubanschlag des Batterieblocks beaufschlagt. Bei weiterem Vorschub des verfahrbaren Hubgerätes kommt es aufgrund des Zusammenwirkens der Auflaufschrägfläche und des Hubanschlages zu einem Anheben des Batterieblocks an dessen an der Batteriefachöffnung liegenden Seite, bis der Hubanschlag auf eine der Auflaufschrägfläche folgende Abflachung des Rampenabschnittes gelangt, welche die Stützfläche für den Hubanschlag bildet. Während dieses Unterfahrvorganges des Hubanschlags mit dem Rampenabschnitt kommt das Verriegelungselement der Verriegelungseinrichtung mit dem komplementären Eingriffselement des Batterieblocks in verriegelnden Eingriff, so dass der Batterieblock nun kraftschlüssig mit dem Hubgerät gekoppelt ist. Beim Zurückziehen des verfahrbaren Hubgerätes wird der Batterieblock zwangsläufig aus seinem Batteriefach herausgezogen. Sobald die Lastaufnahmemittel des Hubgerätes unter dem Batteriefachboden beim Zurückziehen hervorgekommen sind, kann der Batterieblock durch Anheben der Lastaufnahmemittel vollständig darauf aufgenommen werden. Der Batterieblock kann dann mit dem verfahrbaren Hubgerät zu einer Batterieladestation oder dergleichen transportiert werden. Das Einsetzen eines Batterieblocks in das Batteriefach des hier betrachteten Fahrzeuges erfolgt in entsprechend umgekehrter Weise.

Ein besonderer Vorteil der vorliegenden Erfindung liegt darin, dass beim Batterieentnahmevorgang das Anheben des Batterieblocks an dessen mit dem Hubanschlag versehener Seite dadurch erfolgt, dass die Auflaufschrägfläche des Rampenabschnitts die Vorschubbewegung des verfahrbaren Hubgerätes in eine Hubbewegung des Batterieblocks im Batteriefach übersetzt. Bei Verwendung eines elektromotorisch angetriebenen Gabelhubwagens als verfahrbares Hubgerät kann somit der Fahrantrieb dieses verfahrbaren Hubgerätes dazu genutzt werden, den Batterieblock in dem Batteriefach an der Batteriefachöffnungsseite anzuheben und den Hubanschlag auf die Stützfläche des Rampenabschnitts aufzunehmen. Die Lastaufnahmemittel müssen für diesen Vorgang somit nicht gesondert angehoben werden. Das dabei erfolgende Ankoppeln des Batterieblocks an die Verriegelungseinrichtung auf dem verfahrbaren Hubgerät kann somit in einem Vorschubschritt des verfahrbaren Hubgerätes erfolgen, wobei der Verriegelungsvorgang zwischen dem Verriegelungselement der Verriegelungseinrichtung und dem Eingriffselement des Batterieblocks vorzugsweise automatisch erfolgt.

Wie an sich bereits aus der EP 2011761 A2 bekannt, hat der Batterieblock an seiner im Batteriefach der Batteriefachöffnung abgewandten Seite Stützrollen, mit denen er bei Herausziehen oder Einschieben des Batterieblocks auf dem Batteriefachboden abrollen kann.

Der Hubanschlag steht über den an der Batteriefachöffnung liegenden Rand insoweit ab, als er bei Vorschub des Hubgerätes mit dicht unterhalb des Batteriefachbodens vorbewegten Lastaufnahmemitteln von der Auflaufschräge beaufschlagt werden kann. Dabei ist es nicht unbedingt erforderlich, dass der Hubanschlag über den unteren Rand des Batteriefachbodens hinaus nach unten absteht.

Vorzugsweise ist auch der Hubanschlag des Batterieblocks durch wenigstens eine, vorzugsweise zwei Laufrollen gebildet, die nebeneinander liegend in einem bestimmten seitlichen Abstand voneinander angeordnet sind. In Anpassung dazu wird es vorgeschlagen, dass die Verriegelungseinrichtung einen auf den Lastaufnahmemitteln aufliegenden Basisrahmen mit zwei nach vorne abstehenden, nebeneinander liegend in einem bestimmten seitlichen Abstand voneinander angeordneten Rampenabschnitten mit in Richtung zu den vorderen Enden der Lastaufnahmemittel und nach unten schräg verlaufenden, die Auflaufschrägfläche bildenden Keilflächen aufweist. Der seitliche Abstand dieser Rampenabschnitte entspricht im Wesentlichen dem seitlichen Abstand der Hubanschlagrollen des Batterieblocks, so dass bei Beaufschlagung der Hubanschlagrollen durch die Rampenabschnitte beim Heranfahren des Hubgerätes an das Batteriefach die Hubanschlagrollen in Drehung versetzt werden und es zu einer äußerst reibungsarmen Aufnahme des mit den Hubanschlagrollen versehenen Endes des Batterieblocks auf das verfahrbare Hubgerät kommt.

Gemäß einer bevorzugten Weiterbildung der Erfindung weist die Verriegelungseinrichtung einen auf den Lastaufnahmemitteln aufliegenden Basisrahmen und zwei nebeneinander liegend in einem bestimmten seitlichen Abstand voneinander an dem Basisrahmen angeordneten Verriegelungshaken als Verriegelungselemente auf, die um eine gemeinsame Schwenkachse zwischen einer Verriegelungsstellung und einer Entriegelungsstellung schwenkbar sind. Diese Verriegelungshaken sind komplementäre Verriegelungselemente zu zwei an dem Batterieblock vorgesehenen bzw. vorzusehenden Eingriffsabschnitten, etwa Eingriffslöchern, die einen entsprechenden seitlichen Abstand voneinander haben. Vorzugsweise sind die Verriegelungshaken Hebelelemente, die unter Wirkung der Schwerkraft zur Verriegelungsstellung hin drängen, so dass sie automatisch in verriegelnden Eingriff mit den Eingriffselementen an dem Batterieblock kommen können. Sie können an ihren vorderen äußeren Hakenenden Schrägflächen aufweisen, die bei dem Inkontakttreten mit dem Batterieblock während der Annäherungsbewegung dazu führen, dass die Verriegelungshaken automatisch zur Entriegelungsstellung hin angehoben werden, wonach sie dann bei Erreichen der Eingriffselemente in die Verriegelungsstellung fallen können. Die Verriegelungshaken sind zudem gemäß einer bevorzugten Variante so ausgebildet, dass sie in der bestimmungsgemäß verriegelnden Verriegelungsstellung beim Auftreten einer im Wesentlichen horizontalen Rückzugskraft bei Zurückziehen des Hubgerätes zum Verbleib in der Verriegelungsstellung beaufschlagt werden, also noch mehr zum Verschließen neigen. Hierzu sind die Hakeninnenflächen leicht schräg gestellt.

Vorzugsweise sind die Verriegelungshaken durch eine quer zu den Lasttragmitteln des Hubgerätes verlaufende gemeinsame Schwenkwelle zur gemeinsamen Schwenkbewegung um die Achse der Schwenkwelle gekoppelt.

Damit eine Bedienungsperson den verriegelnden Eingriff zwischen den Verriegelungshaken und den Eingriffselementen bei Bedarf lösen kann, sind die Verriegelungshaken vorzugsweise mit einem pedalartigen Fußbetätigungshebel gekoppelt, der von der Bedienungsperson betätigbar ist, um die Verriegelungshaken in ihre Entriegelungsstellung zu überführen.

Gemäß einer besonders bevorzugten Ausführungsform der Erfindung ist die Verriegelungseinrichtung eine zu einem einheitlichen Modul zusammengefasste Baugruppe, die vorzugsweise lösbar abnehmbar auf den Lasttragmitteln des verfahrbaren Hubgerätes befestigt ist. Eine solche Verriegelungseinrichtung kann z. B. mit einem herkömmlichen Gabelhubwagen oder dergleichen rasch kombiniert werden, um ein Batterieentnahmegerät nach der Erfindung zu bilden. Ebenso rasch kann die Verriegelungseinrichtung wieder von dem Hubgerät entfernt werden, so dass letzteres in der üblichen Weise zu Ein- und Ausstapelvorgängen genutzt werden kann.

Vorzugsweise ist die Verriegelungseinrichtung vermittels einer Steckverbindung an den Lasttragmitteln des verfahrbaren Hubgerätes befestigbar, wenngleich alternativ auch eine Schraubverbindung oder Klemmverbindung in Frage kommen könnte.

Gegenstand der Erfindung ist ferner eine Verriegelungseinrichtung für ein Batterieentnahmegerät nach der Erfindung, die in einer zu einem einstückigen Modul zusammengefassten Baugruppe folgende Merkmale umfasst: einen auf den Lastaufnahmemitteln des Hubgerätes zu montierenden Basisrahmen mit zwei nebeneinander liegend in einem bestimmten seitlichen Abstand voneinander angeordneten Rampenabschnitten, welche Auflaufschrägflächen für den unteren Hubanschlag des Batterieblockes bildende Keilflächen aufweisen, und
zwei nebeneinander liegend in einem bestimmten seitlichen Abstand voneinander an dem Basisrahmen angeordnete Verriegelungshaken, die um eine gemeinsame Schwenkachse zwischen einer Verriegelungsstellung und einer Entriegelungsstellung schwenkbar sind, wobei die Verriegelungshaken durch eine gemeinsame Schwenkwelle zur gemeinsamen Schwenkbewegung um die Achse der Schwenkwelle gekoppelt sind.

Vorzugsweise sind die Verriegelungshaken zur Verriegelungsstellung hin vorgespannt, etwa durch Schwerkraft oder/und Federkraft.

Die Verriegelungshaken sind vorzugsweise mit einem Betätigungshebel, insbesondere pedalartigem Fußbetätigungshebel gekoppelt, der von einer Bedienungsperson betätigbar ist, um die Verriegelungshaken in die Entriegelungsstellung zu überführen. Vorzugsweise weist die Verriegelungseinrichtung ferner Steckverbindungsmittel zur lösbaren Verbindung mit den Lastaufnahmemitteln des Hubgerätes auf.

Das Fahrzeug mit einem oder mehreren Batterieblöcken der oben erläuterten Art und das Batterieentnahmegerät bilden in erfindungsgemäßer Weise ein vorteilhaftes Batteriewechselsystem.

Ein Ausführungsbeispiel der Erfindung wird im Folgenden unter Bezugnahme auf die Figuren näher erläutert.
- Fig. 1: zeigt in einer perspektivischen Darstellung ein Elektroflurförder- zeug in Gestalt eines Gabelstaplers.
- Fig. 2: zeigt in einer perspektivischen Darstellung im Wesentlichen das Chassis des Gabelstaplers aus Fig. 1 mit geöffneter Batte- riefachtür.
- Fig. 3: zeigt das von weiteren Rahmenteilen befreite Batteriefach mit einem darin aufgenommenen Wechselbatterieblock und einem Batterieentnahmegerät nach der Erfindung in perspektivischer Darstellung.
- Fig. 4: zeigt in einer perspektivischen Darstellung eine erfindungsge- mäße Verriegelungseinrichtung für ein Batterieentnahmegerät nach der Erfindung.
- Fig. 5: zeigt in einer perspektivischen Darstellung die Verriegelungs- einrichtung aus Fig. 4 ohne Deckelblech.
- Fig. 6: zeigt in einer perspektivischen Darstellung eine Teilansicht ei- nes Batterieentnahmegerätes nach der Erfindung mit einem darauf aufgenommenen Wechselbatterieblock.
- Fig. 7: zeigt in einer Schnittseitenansicht eine Momentaufnahme des Unterfahrens einer Hubanschlagrolle des im Batteriefach des Elektrogabelstaplers befindlichen Wechselbatterieblocks mittels einer Rampe der Verriegelungseinrichtung.
- Fig. 8: zeigt in einer der Fig. 7 entsprechenden Ansicht eine Moment- aufnahme, in der die Hubanschlagrolle auf einem Stützab- schnitt der Rampe aufliegt und der Batterieblock mit der Verrie- gelungseinrichtung gekoppelt ist.
- Fig. 9: zeigt in einer Darstellung mit einem vertikalen Schnitt durch das Batteriefach in einer Seitenansicht den entsprechend Fig. 8 verriegelt an das (nur teilweise dargestellte) Batterieentnahme- gerät angekoppelten Wechselbatterieblock im noch vollständig im Batteriefach aufgenommenen Zustand.
- Fig. 10: zeigt in einer der Fig. 9 ähnlichen Perspektive den nahezu voll- ständig mit dem Batterieentnahmegerät aus dem Batteriefach herausgezogenen Wechselbatterieblock, wobei dessen nach- laufende Stützrollen jedoch noch am Batteriefachboden des Elektrogabelstaplers abgestützt sind.
- Fig. 11: zeigt das in Fig. 10 mit XI angedeutete Detail aus Fig. 10 in ver- größerter Darstellung.
- Fig. 12: zeigt eine der Fig. 11 entsprechende Detaildarstellung der Komponenten aus Fig. 11 nach vollständiger Aufnahme des Wechselbatterieblocks auf das Batterieentnahmegerät.

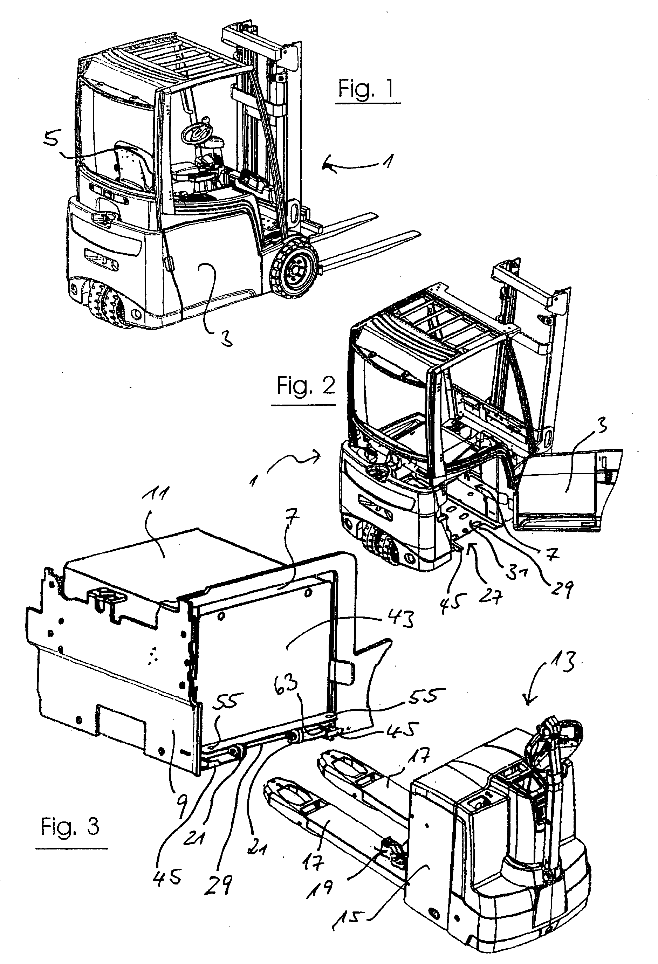

Bei dem in Fig. 1 gezeigten Elektrogabelstapler bezeichnet 3 eine seitliche Batteriefachtür, welche ein unter dem Fahrersitz 5 befindliches Batteriefach 7 verschließt.

In Fig. 2 ist die Batteriefachtür 3 im geöffneten Zustand gezeigt, wobei das Innere des leeren Batteriefachs 7 teilweise erkennbar ist.

Zur Vereinfachung der Darstellung eines im Batteriefach 7 aufgenommenen Wechselbatterieblocks 11 ist in Fig. 3 lediglich der Batteriefachrahmen 9 mit dem im Batteriefach 7 aufgenommenen Wechselbatterieblock 11 gezeigt.

Ferner ist in Fig. 3 ein Batterieentnahmegerät 13 nach der Erfindung in Ausrichtung zu dem nach Öffnen der Batteriefachtür 3 seitlich zugänglichen Batteriefach 7 dargestellt. Das Batterieentnahmegerät umfasst einen deichselgeführten Elektro-Gabelhubwagen 15 mit zwei Lasttraggabeln 17 und eine Verriegelungseinrichtung 19, die mittels einer Steckverbindung auf den Lasttraggabeln 17 fixiert ist.

Der Wechselbatterieblock 11 umfasst einen mit vorderen Hubanschlagrollen 21 und hinteren Stützrollen 23 versehenen Schubrahmen 25. Die vorderen Hubanschlagrollen 21 ragen an der Öffnungsseite 27 des Batteriefachs 7 über den freien Rand 29 des Batteriefachbodens 31 hinweg hervor und insbesondere nach unten ab. Es ist aber nicht unbedingt erforderlich, dass die Rollen über die Unterseite des Batteriefachbodens hinaus nach unten abstehen, wenn der Wechselbatterieblock 11 in der in Fig. 3 gezeigten Normalposition in dem Batteriefach 7 aufgenommen ist.

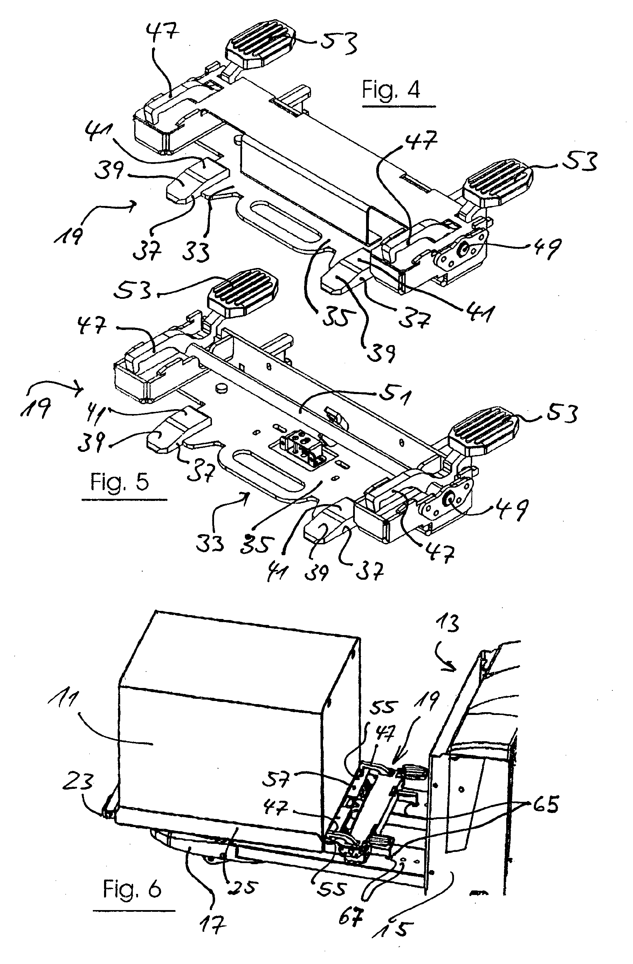

Zur Entnahme des Batterieblocks 11 aus dem Batteriefach 7 wird das Batterieentnahmegerät 13 in der entsprechend Fig. 3 dargestellten Ausrichtung an das Batteriefach 7 herangefahren, wobei die Lasttraggabeln 17 in ihrer Höhe so eingestellt sind, dass sie bei dem Vorschubvorgang des Batterieentnahmegerätes 13 unter den Batteriefachboden 31 gelangen und dabei lediglich einen geringen Abstand von z. B. 3 - 10 mm zur Unterseite des Batteriefachbodens 31 aufweisen. Schließlich kommt bei dieser Vorwärtsbewegung des Batterieentnahmegerätes 13 die Verriegelungseinrichtung 19 zum Einsatz, die insbesondere unter Bezugnahme auf die Fig. 4 und 5 im Folgenden näher erläutert wird.

Die Verriegelungseinrichtung 19 ist eine zu einem einstückigen Modul zusammengefasste Baugruppe, welche einen Basisrahmen 33 mit einer im Gebrauchszustand auf den Lasttraggabeln 17 des Elektro-Gabelhubwagens 15 aufliegenden Bodenplatte 35 und zwei an der Bodenplatte 35 vorgesehene Rampenabschnitte 37 umfasst, die jeweils eine vordere Auflaufschrägfläche 39 für eine Hubanschlagrolle 21 des Batterieblocks 11 sowie eine sich an die Auflaufschrägfläche 39 anschließende Stützfläche 41 für die Hubanschlagrolle 21 aufweisen.

Bei entsprechender Annäherung der Rampenabschnitte 37 an die Hubanschlagrollen 21 in der Situation gemäß Fig. 3 bei dem weiteren Vorschub des Batterieentnahmegerätes 13 treffen die Auflaufschrägflächen 39 der Rampenabschnitte 37 schließlich auf die Hubanschlagrollen 21, wobei diesbezüglich anzumerken ist, dass der seitliche Abstand der um eine gemeinsame Drehachse drehbaren Hubanschlagrollen 21 und der seitliche Abstand der Rampenabschnitte 37 der Verriegelungseinrichtung 19 aufeinander abgestimmt sind. Die Hubanschlagrollen 21 können somit auf den Auflaufschrägflächen 39 der Rampenabschnitte 37 abrollen, wobei es zu einem Anheben des Wechselbatterieblocks 11 an dessen an der Batteriefachöffnungsseite 27 liegenden Vorderseite 43 kommt.

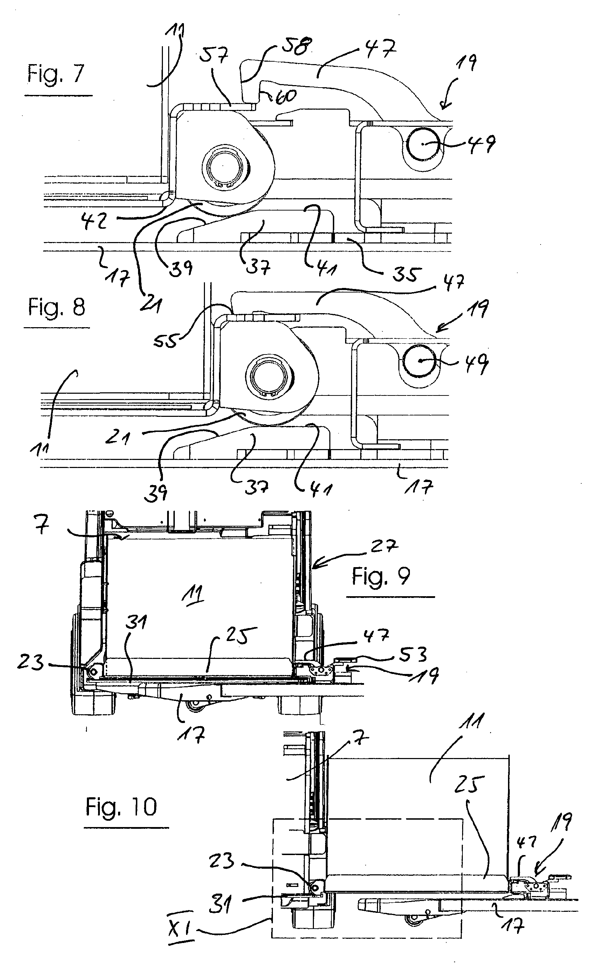

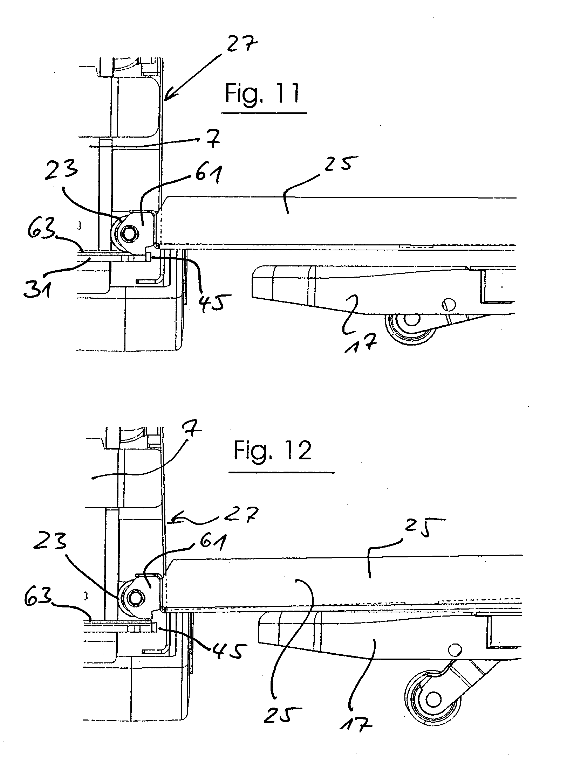

Dieser Vorgang des Anhebens des Batterieblocks 11 aufgrund des Abrollens der Hubanschlagrollen 21 an der Auflaufschrägfläche 39 ist in den Fig. 7 und 8 in zwei aufeinander folgenden Momentaufnahmen illustriert, wobei in Fig. 8 die Hubanschlagrolle 21 bereits die obere Stützfläche 41 des Rampenabschnittes 37 erreicht hat. Bei dieser Hubbewegung kommt der Batterieblock 11 mit seiner vorderen Unterkante 42 über zwei Sicherungsanschläge (45 in Fig. 3 und Fig. 11) hinaus.

Die Verriegelungseinrichtung 19 hat zwei Verriegelungshaken 47, die um eine gemeinsame Schwenkachse 49 zwischen einer Verriegelungsstellung gemäß Fig. 4, 5, 6 und 8 und einer Entriegelungsstellung gemäß Fig. 7 schwenkbar sind. Sie sind hierzu durch eine gemeinsame Schwenkwelle 51 verbunden, die drehbar an dem Basisrahmen 33 gelagert ist. Die Verriegelungshaken 47 bilden mit den Pedalen 53 zweiseitige Hebel mit der Schwenkwelle 51 als Hebeldrehachse, so dass durch Auftreten auf eines der Pedale 53 die Verriegelungshaken 47 in die in Fig. 7 gezeigte Entriegelungsstellung angehoben werden können. Die Schwenkwelle 51 ist sehr niedrig an dem Basisrahmen 33 gelagert, wobei die Verriegelungshaken 47 so geformt und angeordnet sind, dass sie oberhalb der Schwenkwelle 51 liegen.

Die Verriegelungshaken 47 dienen dazu, in zwei Eingriffsöffnungen 55 in einem vorderen horizontalen Blechüberstand 57 des Schubrahmens 25 des Batterieblocks 11 verriegelnd einzugreifen. Dies geschieht automatisch, wenn beim Vorschub des Batterieentnahmegerätes 13 die Hubanschlagrollen 21 des Wechselbatterieblockes 11 entsprechend der Sequenz der Fig. 7 und 8 von der Auflaufschrägfläche 39 zur Stützfläche 41 des Rampenabschnitts gelangen. In Fig. 7 ist ein Verriegelungshaken 47 in der zuvor eingestellten Entriegelungsstellung zu erkennen, wobei er sich unter der Wirkung der Schwerkraft auf dem vorstehenden Blechabschnitt 57 abstützt, bis er schließlich in die Eingriffsöffnung 55 gemäß Fig. 8 verriegelnd hineinfallen kann. Gemäß einer nicht gezeigten Abwandlung des Verriegelungshakens ist dessen Vorderseite schräg angestellt, so dass er bei Beaufschlagung des vorderen Randes des horizontalen Blechüberstandes 57 des Schubrahmens 25 automatisch in die in Fig. 7 gezeigte Entriegelungsstellung gezwungen wird und danach dann in die Verriegelungsstellung gemäß Fig. 8 unter Eingriff in die Eingriffsöffnung 55 gelangt. Die Haken sind in bevorzugter Weise auch so gestaltet, dass sie für eine automatische Entriegelung geeignet sind.

Der Wechselbatterieblock 11 ist nun mit seinem Schubrahmen 25 vermittels der Verriegelungseinrichtung 19 an dem Batterieentnahmegerät 13 angekoppelt, wobei er jedoch noch vollständig gemäß Fig. 9 in dem Batteriefach aufgenommen ist. Beim Zurückziehen des Batterieentnahmegerätes wird nun schließlich der Wechselbatterieblock 11 aus dem Batteriefach 7 herausgezogen, bis die Lasttraggabeln 17 des Batterieentnahmegerätes 13 unter dem Batteriefachboden 31 hervorkommen, wie dies in Fig. 10 gezeigt ist.

Zur Erzielung eines Selbsthemmungseffektes der Haken 47 in der Verriegelungsstellung beim Herausziehen des Batterieblockes 11 aus dem Fach 7 sind die Innenflächen 60 der Haken leicht angeschrägt.

Gemäß Fig. 10 und der daraus vergrößerten Detaildarstellung in Fig. 11 ist der Batterieblock 11 so weit aus dem Batteriefach 7 herausgezogen worden, dass die Rollenhalter 61 der hinteren Stützrollen 23 des Batterieblocks 11 mit ihren unteren Bereichen an den Anschlägen 45 des Batteriefachbodens 31 angekommen sind. Ein weiteres Herausziehen des Batterieblocks 11 aus dem Batteriefach 7 ist erst nach Anheben des Batterieblocks 11 über die Anschläge 45 möglich. Dies erfolgt dadurch, dass die Lasttraggabeln 17 des Elektro-Gabelhubwagens 15 angehoben werden, so dass sie den Batterieblock 11 vollständig aufnehmen, wie dies in Fig. 12 in der Detailansicht zum Ausdruck kommt. Der Batterieblock 11 kann dann schließlich in der in Fig. 6 gezeigten Anordnung auf dem Batterieentnahmegerät 13 transportiert werden. Fig. 6 lässt erkennen, dass der größte Teil des Wechselbatterieblocks 11 in Längsrichtung gesehen von den Lasttraggabeln 17 untergriffen ist, entsprechend dem horizontalen Abstand zwischen den vorderen Enden der Lasttraggabeln 17 und der Verriegelungseinrichtung 19. Dieser Abstand sollte möglichst größer als die halbe Länge des Batterieblocks 11 in Auszugsrichtung gesehen sein.

Ein Elektro-Gabelhubwagen 15 oder ein ähnliches Hubgerät kann somit auf einfache Weise zu einem Batterieentnahmegerät nach der Erfindung umgerüstet werden, indem die vorzugsweise als Modul ausgebildete Verriegelungseinrichtung in entsprechender Weise auf den Lasttraggabeln angeordnet und fixiert wird. Im Beispielsfall wird zur Fixierung eine Steckverbindung mit an der Verriegelungseinrichtung 19 vorgesehenen Steckstiften 65 und in den Lasttraggabeln 17 vorgesehenen Einstecklöchern 67 verwendet. Die Lasttraggabeln 17 können hierzu mit einem Raster von Einstecklöchern präpariert sein, so dass unterschiedliche Abstände zwischen den vorderen Enden der Lasttraggabeln 17 und der darauf zu fixierenden Verriegelungseinrichtung 19 gewählt werden können.

Nachzutragen ist noch, dass der Batteriefachboden 31 des Staplers 1 Führungsschienen 63 für die hinteren Stützrollen 23 des Schubrahmens des Wechselbatterieblocks 11 aufweist.

Das Flurförderzeug 1 mit dem Batterieblock 11 und dem Batterieentnahmegerät 13 bildet ein neues und vorteilhaftes Batteriewechselsystem.

## Patentansprüche

1. Batterieentnahmegerät für ein Fahrzeug (1), insbesondere Elektroflurförderzeug, das ein eine seitliche Batteriefachöffnung (27) und einen Batteriefachboden (31) aufweisendes Batteriefach (7) mit einem darin auf dem Batteriefachboden (31) stehend aufgenommenen und in im Wesentlichen horizontaler Richtung aus dem Batteriefach (7) durch die Batteriefachöffnung (27) hindurch zu entnehmenden Wechselbatterieblock (11) hat, der in der Nähe seiner im Batteriefach (7) nächst der Batteriefachöffnung (27) liegenden Seite ein Eingriffselement (55) für das Batterieentnahmegerät (13) und einen von der Batteriefachöffnung (27) her und von unten frei zugänglichen Hubanschlag (21), insbesondere in Form einer drehbaren Rolle, zur Beaufschlagung durch das Batterieentnahmegerät (13) aufweist, **dadurch gekennzeichnet, dass** das Batterieentnahmegerät (13) ein verfahrbares Hubgerät (15) mit höhenverstellbaren Lastaufnahmemitteln (17) und einer darauf angeordneten Verriegelungseinrichtung (19) zur verriegelnden Ineingriffnahme des Wechselbatterieblocks (11) an dessen Eingriffselement (55) ist und die Verriegelungseinrichtung (19) einen gegenüber dem vorderen Ende der Lastaufnahmemittel (17) zurück versetzten Rampenabschnitt (37) mit einer Auflaufschrägfläche (39) und einer sich daran anschließenden Stützfläche (41) für den Hubanschlag (21) des Wechselbatterieblocks (11) und ein zum Eingriffselement (55) des Wechselbatterieblocks (11) komplementäres Verriegelungselement (47) aufweist, das dazu eingerichtet ist, mit dem Eingriffselement (55) des Wechselbatterieblockes (11) in verriegelnden Eingriff zu treten, wenn der Rampenabschnitt (37) der Verriegelungseinrichtung (19) den Hubanschlag (21) des Wechselbatterieblockes (11) beim Heranführen des Batterieentnahmegerätes (13) an das Batteriefach (7), so dass sich das vordere Ende der Lastaufnahmemittel (17) unter den Batteriefachboden (31) erstreckt, untergreift.

2. Batterieentnahmegerät nach Anspruch 1, **dadurch gekennzeichnet, dass** das verfahrbare Hubgerät ein deichselgeführter Hubwagen (15), insbesondere Gabelhubwagen mit Lasttraggabeln (17) als Lastaufnahmemittel, ist.

3. Batterieentnahmegerät nach Anspruch 2, **dadurch gekennzeichnet, dass** der Gabelhubwagen (15) einen eigenen Fahrantrieb, insbesondere elektromotorischen Fahrantrieb hat.

4. Batterieentnahmegerät nach einem der vorhergehenden Ansprüche, **dadurch gekennzeichnet, dass** die Verriegelungseinrichtung (19) einen auf den Lastaufnahmemitteln aufliegenden Basisrahmen (33) mit zwei nebeneinander liegend in einem bestimmten seitlichen Abstand voneinander angeordneten Rampenabschnitten (37) mit in Richtung zu den vorderen Enden der Lastaufnahmemittel (17) und nach unten schräg verlaufenden, die Auflaufschrägfläche bildenden Keilflächen (39) aufweist.

5. Batterieentnahmegerät nach einem der vorhergehenden Ansprüche, **dadurch gekennzeichnet, dass** die Verriegelungseinrichtung (19) einen auf den Lastaufnahmemitteln (17) aufliegenden Basisrahmen (33) und zwei nebeneinander liegend in einem bestimmten seitlichen Abstand voneinander an dem Basisrahmen (33) angeordnete Verriegelungshaken (47) als Verriegelungselemente aufweist, die um eine gemeinsame Schwenkachse (49) zwischen einer Verriegelungsstellung und einer Entriegelungsstellung schwenkbar sind.

6. Batterieentnahmegerät nach Anspruch 5, **dadurch gekennzeichnet, dass** die Verriegelungshaken (47) durch eine quer zu den Lasttragmitteln (17) verlaufende gemeinsame Schwenkwelle (51) zur gemeinsamen Schwenkbewegung um die Achse (49) der Schwenkwelle gekoppelt sind.

7. Batterieentnahmegerät nach einem der vorhergehenden Ansprüche, **dadurch gekennzeichnet, dass** das Verriegelungselement bzw. die Verriegelungselemente (47) mit einem Betätigungshebel (53), insbesondere pedalartigen Fußbetätigungshebel, gekoppelt sind, der von einer Bedienungsperson betätigbar ist, um das Verriegelungselement bzw. die Verriegelungselemente (47) in eine Entriegelungsstellung zu überführen.

8. Batterieentnahmegerät nach einem der vorhergehenden Ansprüche, **dadurch gekennzeichnet, dass** die Verriegelungseinrichtung (19) eine zu einem einheitlichen Modul zusammengefasste Baugruppe ist.

9. Batterieentnahmegerät nach Anspruch 8, **dadurch gekennzeichnet, dass** die Verriegelungseinrichtung (19) lösbar abnehmbar auf den Lasttragmitteln (17) des fahrbaren Hubgerätes (15) befestigt ist.

10. Batterieentnahmegerät nach Anspruch 9, **dadurch gekennzeichnet, dass** die Verriegelungseinrichtung (19) vermittels einer Steckverbindung (65, 67) an den Lasttragmitteln des fahrbaren Hubgerätes befestigt ist.

11. Verriegelungseinrichtung für ein Batterieentnahmegerät (13) nach einem der vorhergehenden Ansprüche, umfassend in einer zu einem einstückigen Modul zusammengefassten Baugruppe einen auf den Lastaufnahmemitteln (17) des Hubgerätes (15) zu montierenden Basisrahmen (33) mit zwei nebeneinander liegend in einem bestimmten seitlichen Abstand voneinander angeordneten Rampenabschnitten (37), welche Auflaufschrägflächen (39) für den Hubanschlag (21) des Wechselbatterieblockes (11) bildende Keilflächen aufweisen und
zwei nebeneinander liegend in einem bestimmten seitlichen Abstand voneinander an dem Basisrahmen angeordnete Verriegelungshaken (47), die um eine gemeinsame Schwenkachse (49) zwischen einer Verriegelungsstellung und einer Entriegelungsstellung schwenkbar sind, wobei die Verriegelungshaken (47) durch eine gemeinsame Schwenkwelle (51) zur gemeinsamen Schwenkbewegung um die Achse (49) der Schwenkwelle gekoppelt sind.

12. Verriegelungseinrichtung nach Anspruch 11, **dadurch gekennzeichnet, dass** die Verriegelungshaken (47) zur Verriegelungsstellung hin vorgespannt sind.

13. Verriegelungseinrichtung nach Anspruch 11 oder 12, **dadurch gekennzeichnet, dass** die Verriegelungshaken (47) mit einem Betätigungshebel (53), insbesondere pedalartigen Fußbetätigungshebel, gekoppelt sind, der von einer Bedienungsperson betätigbar ist, um die Verriegelungshaken (47) in die Entriegelungsstellung zu überführen.

14. Verriegelungseinrichtung nach Anspruch 11, 12 oder 13, **dadurch gekennzeichnet, dass** sie Steckverbindungsmittel (65) zur lösbaren Verbindung mit den Lastaufnahmemitteln des Hubgerätes aufweist.

## Claims

1. Battery removal device for a vehicle (1), particularly an electric industrial truck which has a battery compartment (7) comprising a lateral battery compartment opening (27) and a battery compartment base (31), with a replaceable battery block (11) contained therein standing on the battery compartment base (31) and intended to be removed from the battery compartment (7) in a substantially horizontal direction through the battery compartment opening (27), which comprises, close to its side located nearest the battery compartment opening (27) in the battery compartment (7), an engagement element (55) for the battery removal device (13) and a lifting stop (21) that is freely accessible from the battery compartment opening (27) and from below, particularly in the form of a rotatable roller, to be acted upon through the battery removal device (13), **characterised in that** the battery removal device (13) is a mobile lifting device (15) with height-adjustable load pick-up means (17) and a locking device (19) arranged thereon for the locking engagement of the replaceable battery block (11) on the engagement element (55) thereof, and the locking device (19) comprises a ramp portion (37), set back in relation to the front end of the load pick-up means (17), having a sloping approach surface (39) and an adjoining support surface (41) for the lifting stop (21) of the replaceable battery block (11) and a locking element (47) that is complementary to the engagement element (55) of the replaceable battery block (11), said locking element being arranged so as to move into locking engagement with the engagement element (55) of the replaceable battery block (11) when the ramp portion (37) of the locking device (19) engages underneath the lifting stop (21) of the replaceable battery block (11) as the battery removal device (13) is brought close to the battery compartment (7), so that the front end of the load pick-up means (17) extends underneath the battery compartment base (31).

2. Battery removal device according to claim 1, **characterised in that** the mobile lifting device is a lift truck (15) guided by a drawbar, particularly a forklift truck with load-bearing forks (17) as the load pick-up means.

3. Battery removal device according to claim 2, **characterised in that** the forklift truck (15) has its own traction drive, particularly an electric motor traction drive.

4. Battery removal device according to one of the preceding claims, **characterised in that** the locking device (19) has a base frame (33) supported on the load pick-up means, having two ramp portions (37) arranged side by side at a specified lateral spacing from one another, with wedge surfaces (39) that form the sloping approach surface extending diagonally downwards towards the front ends of the load pick-up means (17).

5. Battery removal device according to one of the preceding claims, **characterised in that** the locking device (19) has a base frame (33) supported on the load pick-up means and two locking hooks (47) as locking elements, which are arranged side by side on the base frame (33) at a specified lateral spacing from one another, the locking hooks (47) being pivotable about a common pivot axis (49) between a locking position and an unlocking position.

6. Battery removal device according to claim 5, **characterised in that** the locking hooks (47) are coupled by a joint pivot shaft (51) extending transversely of the load pick-up means (17) for a joint pivoting movement about the axis (49) of the pivot shaft.

7. Battery removal device according to one of the preceding claims, **characterised in that** the locking element or elements (47) is or are coupled to an actuating lever (53), particularly a pedal-type foot-operated actuating lever which can be actuated by an operator in order to move the locking element or elements (47) into an unlocking position.

8. Battery removal device according to one of the preceding claims, **characterised in that** the locking device (19) is an assembly combined to form a unified module.

9. Battery removal device according to claim 8, **characterised in that** the locking device (19) is releasably, removably attached to the load pick-up means (17) of the mobile lifting device (15).

10. Battery removal device according to claim 9, **characterised in that** the locking device (19) is attached to the load pick-up means of the mobile lifting device by means of a plug-in connection (65, 67).

11. Locking device for a battery removal device (13) according to one of the preceding claims, comprising, in an assembly that is combined to form an integrated module,
a base frame (33) to be mounted on the load pick-up means (17) of the lifting device (15), having two ramp portions (37) arranged side by side at a specified lateral spacing from one another, which comprise sloping approach surfaces (39) for wedge surfaces that form the lifting stop (21) of the replaceable battery block (11), and
two locking hooks (47) arranged side by side on the base frame at a specified lateral spacing from one another, which are pivotable about a common pivot axis (49) between a locking position and an unlocking position, the locking hooks (47) being coupled by a joint pivot shaft (51) for a joint pivoting movement about the axis (49) of the pivot shaft.

12. Locking device according to claim 11, **characterised in that** the locking hooks (47) are biased towards the locking position.

13. Locking device according to claim 11 or 12, **characterised in that** the locking hooks (47) are coupled to an actuating lever (53), particularly a pedal-type foot-operated actuating lever which can be actuated by an operator in order to move the locking hooks (47) into the unlocking position.

14. Locking device according to claim 11, 12 or 13, **characterised in that** it comprises plug-in connecting means (65) for releasable connection to the load pick-up means of the lifting device.

## Revendications

1. Appareil d'extraction de batterie pour un véhicule (1), notamment un chariot de manutention électrique, qui comporte un compartiment de batterie (7) présentant une ouverture latérale de compartiment de batterie (27) et un fond de compartiment de batterie (31) avec un bloc de batterie de rechange (11) logé dedans debout sur le fond de compartiment de batterie (31) et à extraire dans le sens sensiblement horizontal du compartiment de batterie (7) par l'ouverture de compartiment de batterie (27), lequel bloc présente, à proximité de son côté se trouvant dans le compartiment de batterie (7) le plus près de l'ouverture de compartiment de batterie (27), un élément d'engagement (55) pour l'appareil d'extraction de batterie (13) et une butée de levage (21) accessible librement par l'ouverture de compartiment de batterie (27) et par le bas, en particulier sous la forme d'un rouleau rotatif, pour la sollicitation par l'appareil d'extraction de batterie (13), **caractérisé en ce que** l'appareil d'extraction de batterie (13) est un appareil de levage déplaçable (15) avec des moyens de réception de charge (17) réglables en hauteur et un dispositif de verrouillage (19) disposé dessus pour l'engagement par verrouillage du bloc de batterie de rechange (11) sur son élément d'engagement (55) et le dispositif de verrouillage (19) présente une section de rampe (37) décalée vers l'arrière par rapport à l'extrémité avant des moyens de réception de charge (17) avec une surface oblique de contact (39) et une surface d'appui (41) s'y raccordant pour la butée de levage (21) du bloc de batterie de rechange (11) et un élément de verrouillage (47) complémentaire à l'élément d'engagement (55) du bloc de batterie de rechange (11), qui est aménagé afin de s'engager par verrouillage avec l'élément d'engagement (55) du bloc de batterie de rechange (11) lorsque la section de rampe (37) du dispositif de verrouillage (19) vient en prise sous la butée de levage (21) du bloc de batterie de rechange (11) lorsque l'appareil d'extraction de batterie (13) s'approche du compartiment de batterie (7) de sorte que l'extrémité avant des moyens de réception de charge (17) s'étende sous le fond du compartiment de batterie (31).

2. Appareil d'extraction de batterie selon la revendication 1, **caractérisé en ce que** l'appareil de levage déplaçable est un chariot élévateur guidé (15), en particulier un chariot de levage à fourche avec des fourches porteuses de charge (17) comme moyens de réception de charge.

3. Appareil d'extraction de batterie selon la revendication 2, **caractérisé en ce que** le chariot de levage à fourche (15) présente un propre système d'entraînement, notamment un système d'entraînement à moteur électrique.

4. Appareil d'extraction de batterie selon l'une quelconque des revendications précédentes, **caractérisé en ce que** le dispositif de verrouillage (19) présente un cadre de base (33) reposant sur les moyens de réception de charge avec deux sections de rampes (37) disposées horizontalement l'une à côté de l'autre à une distance latérale déterminée l'une de l'autre, avec des surfaces cunéiformes (39) formant la surface oblique de contact, s'étendant en biais et vers le bas en direction des extrémités avant des moyens de réception de charge (17).

5. Appareil d'extraction de batterie selon l'une quelconque des revendications précédentes, **caractérisé en ce que** le dispositif de verrouillage (19) présente un cadre de base (33) reposant sur les moyens de réception de charge (17) et deux crochets de verrouillage (47) disposés horizontalement l'un à côté de l'autre à une distance latérale déterminée l'un de l'autre sur le cadre de base (33) servant d'éléments de verrouillage qui peuvent pivoter autour d'un axe de pivotement commun (49) entre une position de verrouillage et une position de déverrouillage.

6. Appareil d'extraction de batterie selon la revendication 5, **caractérisé en ce que** les crochets de verrouillage (47) sont couplés par un arbre de pivotement (51) commun s'étendant transversalement aux moyens porteurs de charge (17) pour le déplacement pivotant commun autour de l'axe (49) de l'arbre de pivotement.

7. Appareil d'extraction de batterie selon l'une quelconque des revendications précédentes, **caractérisé en ce que** l'élément de verrouillage ou les éléments de verrouillage (47) sont couplés à un levier d'actionnement (53), en particulier un levier d'actionnement au pied de type pédale, qui peut être actionné par un opérateur afin de placer l'élément de verrouillage ou les éléments de verrouillage (47) dans une position de déverrouillage.

8. Appareil d'extraction de batterie selon l'une quelconque des revendications précédentes, **caractérisé en ce que** le dispositif de verrouillage (19) est un sous-groupe réuni en un module unitaire.

9. Appareil d'extraction de batterie selon la revendication 8, **caractérisé en ce que** le dispositif de verrouillage (19) est fixé de manière détachable et amovible sur les moyens porteurs de charge (17) de l'appareil de levage (15) mobile.

10. Appareil d'extraction de batterie selon la revendication 9, **caractérisé en ce que** le dispositif de verrouillage (19) est fixé à l'aide d'une liaison par emboîtement (65, 67) aux moyens porteurs de charge de l'appareil de levage mobile.

11. Dispositif de verrouillage pour un appareil d'extraction de batterie (13) selon l'une quelconque des revendications précédentes, comprenant dans un sous-groupe réuni en un module d'un seul tenant un cadre de base (33) à monter sur les moyens de réception de charge (17) de l'appareil de levage (15), avec deux sections de rampe (37) disposées horizontalement l'une à côté de l'autre à une distance latérale déterminée l'une de l'autre qui présentent des surfaces cunéiformes formant des surfaces obliques de contact (39) pour la butée de levage (21) du bloc de batterie de rechange (11) et
deux crochets de verrouillage (47) disposés horizontalement l'un à côté de l'autre à une distance latérale déterminée l'un de l'autre sur le cadre de base, qui peuvent pivoter autour d'un axe de pivotement (49) commun entre une position de verrouillage et une position de déverrouillage, les crochets de verrouillage (47) étant couplés par un arbre de pivotement (51) commun pour le mouvement pivotant commun autour de l'axe (49) de l'arbre de pivotement.

12. Dispositif de verrouillage selon la revendication 11, **caractérisé en ce que** les crochets de verrouillage (47) sont précontraints vers la position de verrouillage.

13. Dispositif de verrouillage selon la revendication 11 ou 12, **caractérisé en ce que** les crochets de verrouillage (47) sont couplés à un levier d'actionnement (53), notamment un levier d'actionnement au pied de type pédale, qui peut être actionné par un opérateur afin de placer les crochets de verrouillage (47) dans la position de déverrouillage.

14. Dispositif de verrouillage selon la revendication 11, 12 ou 13, **caractérisé en ce qu'**il présente des moyens de liaison par emboîtement (65) pour la liaison détachable avec les moyens de réception de charge de l'appareil de levage.
